# EUROPÄISCHE PATENTANMELDUNG

(11) **EP 1 683 664 A1**
(43) Veröffentlichungstag der Anmeldung: **26.07.2006**
(21) Anmeldenummer: 05290143.6
(22) Anmeldetag: 21.01.2005
(51) Int. Cl.: B60H 1/00

(54) **Kraftfahrzeug-Klimaanlage**

(71) Anmelder: Behr France Rouffach SAS, 68250 Rouffach (FR)
(72) Erfinder: Klein, Henri, 68000 Colmar (FR)
(74) Vertreter: Grauel, Andreas

(57) **Zusammenfassung**

Die Erfindung betrifft eine Kraftfahrzeug-Klimaanlage (1) für die Temperierung des Frontbereichs mit einem ersten Gebläse (2), einem Verdampfer (4) und einem Heizer (5) und gegebenenfalls einem Zuheizer (6) sowie einem Luftkanal (10) für die Fond-Belüftung, wobei im Luftkanal (10) für die Fond-Belüftung mindestens ein zusätzliches, zweites Gebläse (13) mit Gebläsegehäuse (14) angeordnet ist, und wobei es sich beim Luftkanal (10) für die Fond-Belüftung um einen Kaltluftkanal handelt.

## Beschreibung

Die Erfindung betrifft eine Kraftfahrzeug-Klimaanlage gemäß dem Oberbegriff des Anspruchs 1.

Bei Kraftfahrzeug-Klimaanlagen mit einer Fond-Belüftung ist die Versorgung des Fond-Bereichs mit ausreichend Luft, insbesondere mit einer etwas temperierten Luft, in aller Regel problematisch. Auf Grund der Kanallänge kann im Luftkanal ein zusätzliches Gebläse vorgesehen sein, welches die Luft nach hinten fördert. Eine derartige Ausgestaltung lässt keine separate Temperierung der dem Fondraum zugeführten Luft zu, so dass Front- und Fondbereich etwa mit Luft gleicher Temperatur versorgt werden.

Altemativ können zwei Klimaanlagen vorgesehen sein, was jedoch sehr aufwendig und teuer ist.

Es ist Aufgabe der Erfindung, eine verbesserte aber relativ kostengünstige Kraftfahrzeug-Klimaanlage zur Verfügung zu stellen.

Diese Aufgabe wird gelöst durch eine Kraftfahrzeug-Klimaanlage mit den Merkmalen des Anspruchs 1. Vorteilhafte Ausgestaltungen sind Gegenstand der Unteransprüche.

Erfindungsgemäß ist eine Kraftfahrzeug-Klimaanlage vorgesehen, die für die Temperierung des Fondbereichs ausgelegt ist, mit einem Luftkanal für die Fond-Belüftung, wobei im Luftkanal für die Fond-Belüftung mindestens ein zusätzliches, zweites Gebläse mit Gebläsegehäuse angeordnet ist, und wobei es sich beim Luftkanal für die Fond-Belüftung um einen Kaltluftkanal handelt. Dadurch lässt sich über den Luftkanal, unterstützt von der Förderwirkung des zweiten Gebläses ausreichend Kaltluft in den Fondbereich transportieren, so dass eine ausreichende Kühlung möglich ist.

Das Gebläsegehäuse weist bevorzugt einen zusätzlichen, regelbaren Umluft-Einlass zum Ansaugen von Umluft aus dem Fahrzeuginnenraum auf. Dadurch lässt sich auf einfache Weise warme Umluft mit der von der Klimaanlage kommenden Kaltluft mischen, so dass dem Fondbereich nie wärmere Luft als dem Frontbereich zugeführt wird, was insbesondere bei geringen Außentemperaturen vorteilhaft ist.

Bevorzugt ist (auch) der Kaltluft-Einlass des Kaltluftkanals in das Gebläsegehäuse regelbar, so dass insgesamt auf einfache und relativ kostengünstige Weise eine Temperierung der dem Fondbereich zugeführten Luft möglich ist. Hierbei wird die Front-Klimaanlage nicht kompliziert und die Temperierung des Frontbereichs wird nicht oder nur unwesentlich beeinflusst.

Zur Temperierung ist bevorzugt eine Klappe, insbesondere eine Trommelklappe, vorgesehen, welche in Abhängigkeit der gewünschten Temperatur im Fondbereich den Kaltluft-Einlass ganz oder teilweise freigibt oder verschließt und entsprechend den Umluft-Einlass verschließt oder teilweise oder ganz freigibt. Auf diese Weise ist eine sehr einfache und kostengünstige Regelung der Temperatur der dem Fondbereich zugeführten Luft möglich. Sind je zwei oder mehr Kaltluft- und Umluft-Einlasspaare vorhanden, so ist bevorzugt je Einlasspaar eine Klappe vorgesehen, wobei die einzelnen Klappen miteinander gekoppelt sind, so dass die jeweils freigegebenen Öffnungen der Kaltluft- bzw. Umluft-Einlässe einander entsprechen. Dadurch lässt sich auf bei mehreren Klappen eine einfache Regelung verwirklichen.

Der Kaltluftkanal von der Klimaanlage zweigt bevorzugt nach dem Verdampfer und vor dem Heizer und ggf. Zuheizer ab. In diesem Bereich ist konstruktiv in der Regel ausreichend Raum für eine Abzweigung eines Luftkanals vorhanden, so dass das Luftführungsgehäuse der Klimaanlage nicht wesentlich kompliziert wird.

Bevorzugt sind zwei Kaltluftkanäle vorgesehen, die dem zweiten Gebläse zugeführt werden. Natürlich können auch nur ein Kaltluftkanal oder mehr als zwei Kaltluftkanäle vorgesehen sein, jedoch sind aus konstruktiven Gesichtspunkten insbesondere bei Einbau des zweiten Gebläses zwischen den beiden Vordersitzen zwei symmetrisch zueinander ausgebildete Kaltluftkanäle vorteilhaft.

Die beiden Kaltluftkanäle werden bevorzugt dem zweiten Gebläse von einander gegenüberliegenden Seiten aus zugeführt.

Bevorzugt sind zwei Umluftkanäle vorgesehen, die ebenfalls dem zweiten Gebläse zugeführt werden auch diese werden bevorzugt dem zweiten Gebläse von einander gegenüberliegenden Seiten aus zugeführt, so dass sich insgesamt bevorzugt eine symmetrische Ausgestaltung ergibt.

Im Folgenden wird die Erfindung anhand eines Ausführungsbeispiels unter Bezugnahme auf die Zeichnung im Einzelnen erläutert. In der Zeichnung zeigen:
- Fig. 1: einen schematisch dargestellten Schnitt durch eine Kraftfahrzeug-Klimaanlage mit abzweigendem Kaltluftkanal,
- Fig. 2: einen schematisch dargestellten Schnitt durch ein im Kaltluftkanal angeordnetes Gebläse in der Betriebsstellung "100% kalt",
- Fig. 3: einen schematisch dargestellten Schnitt durch ein im Kaltluftkanal angeordnetes Gebläse in einem Mischbetrieb,
- Fig. 4: einen schematisch dargestellten Schnitt durch ein im Kaltluftkanal angeordnetes Gebläse in der Betriebsstellung "100% warm", und
- Fig. 5: eine perspektivische Ansicht der Klimaanlage.

Eine Kraftfahrzeug-Klimaanlage 1 mit einem ersten Gebläse 2, einem Filter 3, einem Verdampfer 4 einem Heizer 5 und einem Zuheizer 6 ist insbesondere für die Belüftung und Temperierung des Frontbereichs eines Kraftfahrzeuginnenraums ausgelegt. Hierfür saugt das erste Gebläse 2 Luft von der Umgebung und/oder dem Fahrzeuginnenraum an. Die Luft wird durch den Filter 3 und den Verdampfer 4 sowie gegebenenfalls auch durch den Heizer 5 und Zuheizer 6 geleitet und bedarfsgerecht, d.h. entsprechend der Einstellung, dem Fahrzeuginnenraum im Frontbereich, d.h. dem Fußraum und den Mittel- und Seitendüsen oder im Defrostfall insbesondere der Windschutzscheibe, zugeführt.

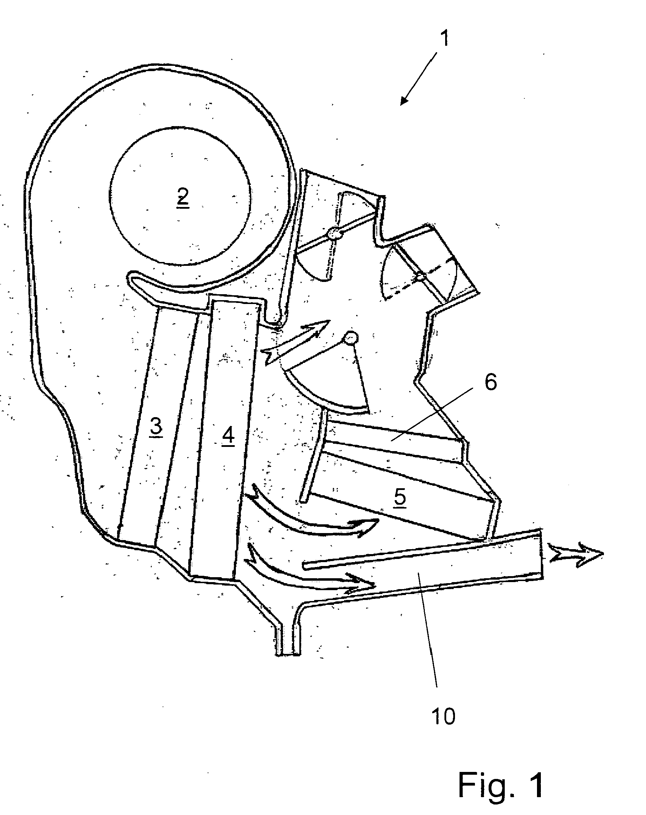

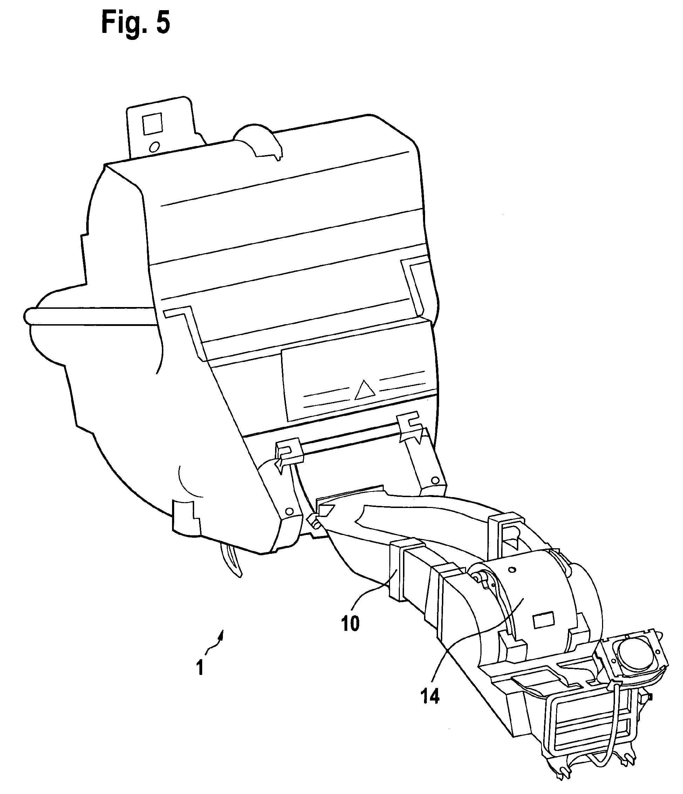

Ein Teil der vom Gebläse 2 angesaugten Luft wird über einen Luftkanal 10, wobei es sich auf Grund der Stelle der Abzweigung nach dem Verdampfer 4 und vor dem Heizer 5 und Zuheizer 6 um einen Kaltluftkanal handelt, dem Fondbereich zugeführt (siehe Fig. 1). Vorliegend sind zwei Luftkanäle 10 vorgesehen (siehe z.B. Fig. 5).

Die beiden Luftkanäle 10 münden über je einen von einer Klappe 11, vorliegend einer Trommelklappe, geregelten Kaltluft-Einlass 12, in ein Gebläsegehäuse 14 eines zweiten Gebläses 13, das vorliegend zwischen den Vordersitzen des Kraftfahrzeugs angeordnet ist. Die beiden Klappen 11 sind über eine Kinematik miteinander gekoppelt und verschwenkbar. Im Gebläsegehäuse 14 des zweiten Gebläses 13 sind zwei weitere Umluft-Einlässe 15 für vom Gebläse 13 über einen Umluftkanal (nicht näher dargestellt) angesaugte Umluft aus dem Fahrzeuginnenraum vorgesehen, welche vorliegend ebenfalls durch die gleichen Klappen 11 geregelt werden. Prinzipiell wäre auch das Vorsehen getrennt ausgebildeter Klappen für die einzelnen Einlässe 12 und 15 möglich. Die vom Gebläse 13 angesaugte und gegebenenfalls auch durch dasselbe gemischte Luft wird anschließend dem Fondbereich des Fahrzeuginnenraums zugeführt. Die Rotationsachsen der Klappen 11 sind senkrecht zur Drehachse des Gebläses 13 angeordnet. In einer alternativen, nicht in den Figuren dargestellten Variante, können die Klappen 11 auch als halbkugelförmige Klappen mit einer Rotationsachse parallel zur Drehachse des Gebläses 13, ausgeführt sein.

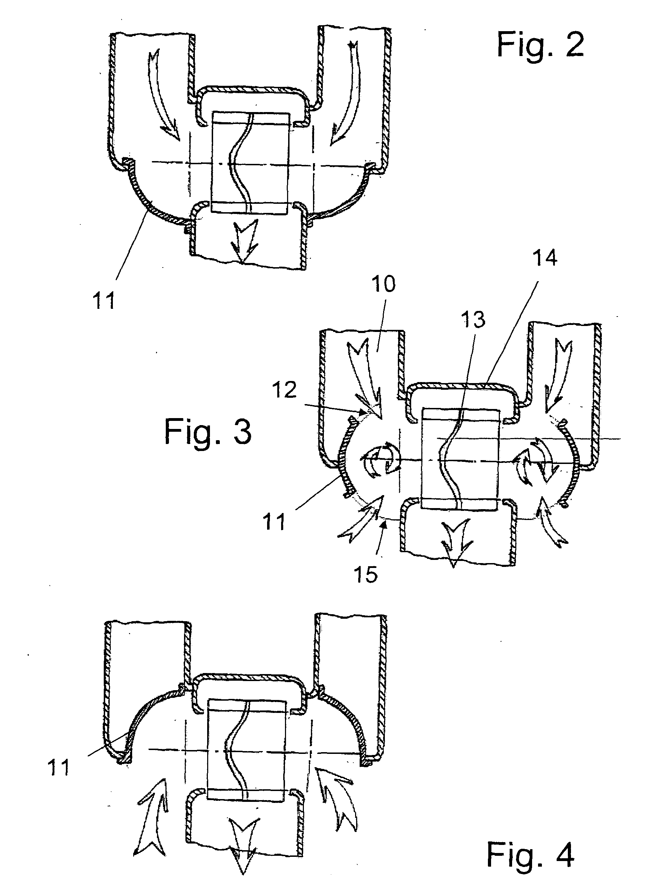

Bei der in Fig. 2 gezeigten Klappenstellung, verschließen die Klappen 11 jeweils die Umluft-Einlässe 15, so dass vom zweiten Gebläse 13 nur gekühlte Luft in den Fondbereich gefördert wird.

Eine Mischstellung der Klappen 11 ist in Fig. 3 dargestellt. Die Klappen 11 sind in etwa in eine Mittelstellung verschwenkt, wodurch vom Gebläse 13 über die Kanäle 10 gekühlte Luft und über die Umluft-Einlässe 15 Umluft angesaugt und in Richtung Fondbereich weiterbefördert werden kann.

In Folge der Möglichkeit, dass die von der Klimaanlage 1 kommende Kaltluft mit (warmer) Umluft vermischt werden kann, ermöglicht sich eine einfache bedarfsgerechte Temperierung der dem Fondbereich zugeführten Luft. Im Falle eines maximalen Luftdurchsatzbedarfs im Frontbereich kann der Kaltluftkanal 10 durch die Klappen 11, wie in Fig. 4 gezeigt, vollständig geschlossen werden, so dass die volle Leistung und insbesondere die gesamte vom ersten Gebläse 2 angesaugte Luft dem Frontbereich zur Verfügung steht. Im Fondbereich steht in diesem Fall allerdings nur die Umluft zur Zirkulation zur Verfügung.

### Bezugszeichenliste

- 1: Kraftfahrzeug-Klimaanlage
- 2: erstes Gebläse
- 3: Filter
- 4: Verdampfer
- 5: Heizer
- 6: Zuheizer
- 10: Luftkanal
- 11: Klappe
- 12: Kaltluft-Einlass
- 13: zweites Gebläse
- 14: Gebläsegehäuse
- 15: Umluft-Einlass

## Patentansprüche

1. Kraftfahrzeug-Klimaanlage für die Temperierung des Frontbereichs mit einem ersten Gebläse (2), einem Verdampfer (4) und einem Heizer (5) und gegebenenfalls einem Zuheizer (6) sowie einem Luftkanal (10) für die Fond-Belüftung, **dadurch gekennzeichnet, dass** im Luftkanal (10) für die Fond-Belüftung mindestens ein zusätzliches, zweites Gebläse (13) mit Gebläsegehäuse (14) angeordnet ist, und dass es sich beim Luftkanal (10) für die Fond-Belüftung um einen Kaltluftkanal handelt.

2. Kraftfahrzeug-Klimaanlage nach Anspruch 1, **dadurch gekennzeichnet, dass** das Gebläsegehäuse (14) einen zusätzlichen, regelbaren Umluft-Einlass (15) zum Ansaugen von Umluft aus dem Fahrzeuginnenraum aufweist.

3. Kraftfahrzeug-Klimaanlage nach Anspruch 1 oder 2, **dadurch gekennzeichnet, dass** der Kaltluft-Einlass (12) des Kaltluftkanals in das Gebläsegehäuse (14) regelbar ist.

4. Kraftfahrzeug-Klimaanlage nach Anspruch 2 und 3, **dadurch gekennzeichnet, dass** zur Temperierung eine Klappe (11), insbesondere eine Trommelklappe, vorgesehen ist, welche in Abhängigkeit der gewünschten Temperatur im Fondbereich den Kaltluft-Einlass (12) ganz oder teilweise freigibt oder verschließt und entsprechend den Umluft-Einlass (14) verschließt oder teilweise oder ganz freigibt.

5. Kraftfahrzeug-Klimaanlage nach einem der vorhergehenden Ansprüche, **dadurch gekennzeichnet, dass** der Kaltluftkanal von der Klimaanlage (1) nach dem Verdampfer (4) und vor dem Heizer (5) und ggf. Zuheizer (6) abzweigt.

6. Kraftfahrzeug-Klimaanlage nach einem der vorhergehenden Ansprüche, **dadurch gekennzeichnet, dass** zwei Kaltluftkanäle vorgesehen sind, die dem zweiten Gebläse (13) zugeführt werden.

7. Kraftfahrzeug-Klimaanlage nach Anspruch 6, **dadurch gekennzeichnet, dass** die zwei Kaltluftkanäle dem zweiten Gebläse (13) von einander gegenüberliegenden Seiten aus zugeführt werden.

8. Kraftfahrzeug-Klimaanlage nach einem der vorhergehenden Ansprüche, **dadurch gekennzeichnet, dass** zwei Umluftkanäle vorgesehen sind, die dem zweiten Gebläse (13) zugeführt werden.

9. Kraftfahrzeug-Klimaanlage nach Anspruch 8, **dadurch gekennzeichnet, dass** die zwei Umluftkanäle dem zweiten Gebläse (13) von einander gegenüberliegenden Seiten aus zugeführt werden.
